# EUROPÄISCHE PATENTSCHRIFT

(11) **EP 3 501 258 B1**
(45) Veröffentlichungstag und Bekanntmachung des Hinweises auf die Patenterteilung: **17.08.2022**
(21) Anmeldenummer: 18203634.3
(22) Anmeldetag: 31.10.2018
(51) Int. Cl.: A01F 12/20, A01F 12/22, A01F 12/24

(54) **MÄHDRESCHER**
COMBINE HARVESTER
MOISSONNEUSE-BATTEUSE

(30) Priorität: 20.12.2017 DE 102017011801
(43) Veröffentlichungstag der Anmeldung: 26.06.2019
(73) Patentinhaber: CLAAS Selbstfahrende Erntemaschinen GmbH, 33428 Harsewinkel (DE)
(72) Erfinder: Holtmann, Bernd, 48324 Sendenhorst (DE); Dabbelt, Peter, 59387 Ascheberg (DE)
(74) Vertreter: CLAAS Gruppe

(56) Entgegenhaltungen:
- EP-A1- 1 197 136
- EP-A1- 1 559 307
- EP-A1- 3 075 226
- EP-A2- 0 522 267
- WO-A1-2010/047430
- WO-A1-2015/075021
- DE-A1- 3 914 962

## Beschreibung

Die vorliegende Erfindung betrifft einen Mähdrescher mit einem Dreschwerk, das wenigstens eine Dreschtrommel und einen die Dreschtrommel auf wenigstens einem Teil ihres Umfangs umgebenden Dreschkorb umfasst. Ein solcher Mähdrescher ist z.B. aus DE 39 14 962 A1 oder aus EP 3 075 226 A1 bekannt.

Durch eine Drehung der Dreschtrommel wird Erntegut entlang eines Dreschspalts zwischen Dreschtrommel und Dreschkorb gefördert und dabei ausgedroschen. Durch das Dreschen wird das Erntegut in zwei Gutströme aufgeteilt, einen kleinteiligen Strom, dessen Partikel die Öffnungen eines Siebsegments des Dreschkorbs passieren konnten, und der den Kornanteil des Ernteguts möglichst vollständig und möglichst frei von Verunreinigungen enthalten sollte, und einen grobteiligen Strom, der möglichst frei von Kornanteilen sein sollte, dafür aber Stengel und Blätter des Ernteguts möglichst vollständig enthalten sollte.

Die Qualität, mit der die Trennung dieser beiden Ströme gelingt, hängt kritisch von der Geometrie des Dreschspalts ab. EP 3 075 226 A1 schlägt daher vor, die Dreschkörbe dem jeweiligen Erntegut anpassen zu können, wozu man insbesondere an der Einlassseite des Dreschkorbs austauschbare Einsätze verwendet. Diese Einsätze weisen sich in axialer Richtung erstreckende Gutbearbeitungsleisten auf.

Um den Austausch der Einsätze zu erleichtern, sind diese an einem Grundkörper angebracht, der zwischen einer Betriebsposition und einer Ausbauposition schwenkbar ist.

Der Austausch der Einsätze ermöglicht insbesondere eine Veränderung der Breite des Dreschspalts in Anpassung an unterschiedliche Arten von Erntegut. Die Dreschwirkung basiert im Wesentlichen auf einer Scherbeanspruchung zwischen der rotierenden Dreschtrommel auf einer Seite und den ortsfesten Gutbearbeitungsleisten des Dreschkorbs auf der anderen Seite des Dreschspalts.

Eine solche Scherbeanspruchung liefert gute Ergebnisse beim Dreschen von Erntegut, bei dem der Kornanteil in Form von Ähren, Schoten oder Hülsen vorliegt, also bei Weizen, Roggen, Mais oder Leguminosen, nicht aber bei Reis, dessen Körner in lockeren Rispen sitzen. Um dessen Körner von den Halmen zu lösen, sind Dreschwerke gebräuchlich, bei denen Dreschkorb und Dreschtrommel mit in den Dreschspalt eingreifenden Zähnen besetzt sind. Indem die Zähne der Trommel einen Halm mit sich ziehen und dessen Körner an den Zähnen des Dreschkorbs hängenbleiben, werden hier die Körner vom Halm abgestreift.

Eine für die Reisernte optimierte Dreschtrommel taugt daher nicht ideal zum Dreschen anderer Körnerfrüchte, und umgekehrt. Ein Austausch der Dreschtrommel ist mit erheblichen Kosten und Montageaufwand für den Betreiber verbunden und nur selten wirtschaftlich.

Aufgabe der Erfindung ist, einen Mähdrescher zu schaffen, der mit geringem Aufwand sowohl für die Reisernte als auch bei der Ernte anderer Körnerfrüchte einsetzbar ist.

Die Aufgabe wird durch einen Mähdrescher den Merkmalen des Anspruchs 1 gelöst, nämlich indem bei einem Mähdrescher mit einem Dreschwerk, das wenigstens eine Dreschtrommel und einen die Dreschtrommel auf wenigstens einem Teil ihres Umfangs umgebenden Dreschkorb umfasst, die Dreschtrommel und der Dreschkorb jeweils einen Grundkörper und wenigstens einen ersten Satz von an dem Grundkörper austauschbar adaptierten Gutbearbeitungsleisten umfassen.

Erfindungsgemäß umfasst der Mähdrescher einen ersten und einen zweiten Satz von Gutbearbeitungsleisten , , wobei der zweite Satz anstelle des ersten Satzes montierbar ist und der erste und der zweite Satz an unterschiedliche Arten von Erntegut angepasst sind.

Erfindungsgemäß weisen die dreschtrommelseitigen Gutbearbeitungsleisten und die dreschkorbseitigen Gutbearbeitungsleisten des ersten Satzes Zähne auf, die im montierten Zustand in einem Dreschspalt radial überlappen. Beim zweiten Satz hingegen sollten die dreschtrommelseitigen Gutbearbeitungsleisten und die dreschkorbseitigen Gutbearbeitungsleisten im montierten Zustand radial nicht überlappen.

Die dreschtrommelseitigen Gutbearbeitungsleisten wenigstens eines Satzes erstrecken sich vorzugsweise zusammenhängend über die gesamte axiale Ausdehnung des Dreschwerks. Da sie so zur Steifigkeit der Dreschtrommel beitragen - insbesondere wenn sie nicht nur an ihren Enden, sondern auch an dazwischenliegenden Stellen am Grundkörper der Dreschtrommel verankert sind - ermöglichen sie es, das Gewicht der Dreschtrommel gering zu halten.

Ein solcher leichtgewichtiger Grundkörper kann insbesondere eine Mehrzahl von auf einer Trägerwelle beabstandet voneinander aufgereihten Platten umfassen, an deren Rändern die dreschtrommelseitigen Gutbearbeitungsleisten verankert sind.

Die Zähne des ersten Satzes unterliegen starkem Verschleiß und sind deshalb vorzugsweise an einer Trägerleiste austauschbar montiert. Damit die Zähne einer Trägerleiste über die ganze axiale Ausdehnung des Dreschwerks hinweg gleichmäßig beabstandet angebracht werden und gleich fest verankert werden können, erstreckt die Trägerleiste sich vorzugsweise ununterbrochen über die gesamte axiale Ausdehnung des Dreschwerks.

Um die Austauschbarkeit der Gutbearbeitungsleisten sicherzustellen, ohne dafür die Karosserie des Mähdreschers weitgehend zerlegen zu müssen, sollte das Dreschwerk über eine Revisionsöffnung zugänglich ist, deren Abmessung wenigstens der Länge der Gutbearbeitungsleisten entspricht. So können insbesondere auch mehrere in einem Rahmen miteinander verbundene dreschkorbseitige Gutbearbeitungsleisten in einem Stück entnommen bzw. eingefügt werden.

Wenn Gutbearbeitungsleisten, insbesondere an der Dreschtrommel, einzeln ein- und ausbaubar sein sollen, dann sollten sie zweckmäßigerweise nicht nur an ihren Enden im Dreschwerk verankert. Die Mitte der Gutbearbeitungsleisten ist jedoch nur schwer zugänglich. Wenn jedoch ein dem Dreschwerk vorgelagerter Schrägförderer abmontiert wird, so wird dadurch an der Karosserie eine Öffnung frei, über die im Betrieb das Erntegut vom Schrägförderer in das Dreschwerk übertritt. Über diese Öffnung können nicht nur Bearbeitungsleisten ein- und ausgebaut werden, sie erleichtert auch den Zugang zu Stellen in der Mitte der Bearbeitungsleisten, so dass dort eine Verankerung, z.B. eine Schraube, gelöst bzw. befestigt werden kann.

Die oben erwähnte Revisionsöffnung sollte mit einem Anschluss des Schrägförderers an der Karosserie nicht überlappen, so dass sie ohne vorherige Demontage des Schrägförderers geöffnet werden kann. Vorzugsweise ist sie oberhalb des Schrägförderers angeordnet.

Die dreschkorbseitigen Gutbearbeitungsleisten sind vorzugsweise in einem bezogen auf die Förderrichtung des Ernteguts durch das Dreschwerk stromaufwärtigen Bereich des Grundkörpers des Dreschkorbs montiert. An einem stromabwärtigen Bereich des Grundkörpers bleibt dann Platz für ein austauschbares erstes Siebsegment, das vorgesehen ist, um den Kornanteil des gedroschenen Ernteguts durchzulassen und das in Anpassung an die Art des Ernteguts unterschiedliche Maschengeometrien haben kann.

Um einen Austausch der dreschkorbseitigen Gutbearbeitungsleisten zu ermöglichen, ohne dafür die Karosserie des Mähdreschers weitgehend zerlegen und den Dreschkorb freilegen zu müssen, kann ein sich tangential zum Dreschkorb erstreckender Montagekanal vorgesehen sein, über den die dreschkorbseitigen Gutbearbeitungsleisten in den Mähdrescher eingeführt und wieder entnommen werden können. Wenn derselbe Montagekanal auch für das erste Siebsegment genutzt werden sollte, müsste er sehr lang und stark gekrümmt sein, und eine Verankerung des ersten Siebsegments am Ende des Montagekanals wäre beschwerlich. Deshalb ist das erste Siebsegment vorzugsweise in axialer Richtung aus dem Dreschwerk entnehmbar.

Als ein weiterer Zugangsweg zu den dreschkorbseitigen Gutbearbeitungsleisten kann eine Steinfangmulde im Übergangsbereich vom Schrägförderer zur Karosserie des Mähdreschers demontierbar sein.

Der Grundkörper des Dreschkorbs kann ein zweites Siebsegment aufweisen, das in Förderrichtung des Ernteguts an das erste Siebsegment anschließt.

Dadurch kann die Ausdehnung des ersten Siebsegments in Umfangsrichtung des Dreschkorbs klein gehalten werden, und dementsprechend klein kann auch eine Öffnung an der Karosserie des Mähdreschers gehalten werden, über die das erste Siebsegment in das Dreschwerk einführbar bzw. entnehmbar ist.

Weitere Merkmale und Vorteile der Erfindung ergeben sich aus der nachfolgenden Beschreibung von Ausführungsbeispielen unter Bezugnahme auf die beigefügten Zeichnungen. Es zeigen:
- Fig. 1: einen schematischen Schnitt durch einen Mähdrescher gemäß der vorliegenden Erfindung;
- Fig. 2: einen Grundkörper des Dreschkorbs des Mähdreschers;
- Fig. 3: Siebsegmente und Gutbearbeitungsleisten eines ersten Satzes zur Anbringung an dem Grundkörper der Fig. 2;
- Fig. 4: Siebsegmente und Gutbearbeitungsleisten eines zweiten Satzes;
- Fig. 5: einen Grundkörper der Dreschtrommel des Mähdreschers;
- Fig. 6: die Dreschtrommel, bestückt mit Gutbearbeitungsleisten eines ersten Satzes;
- Fig. 7: die Dreschtrommel, bestückt mit Gutbearbeitungsleisten eines zweiten Satzes
- Fig. 8: einen Schnitt durch das Dreschwerk in Betriebsstellung; und
- Fig. 9: einen Schnitt durch das Dreschwerk in Montagestellung.

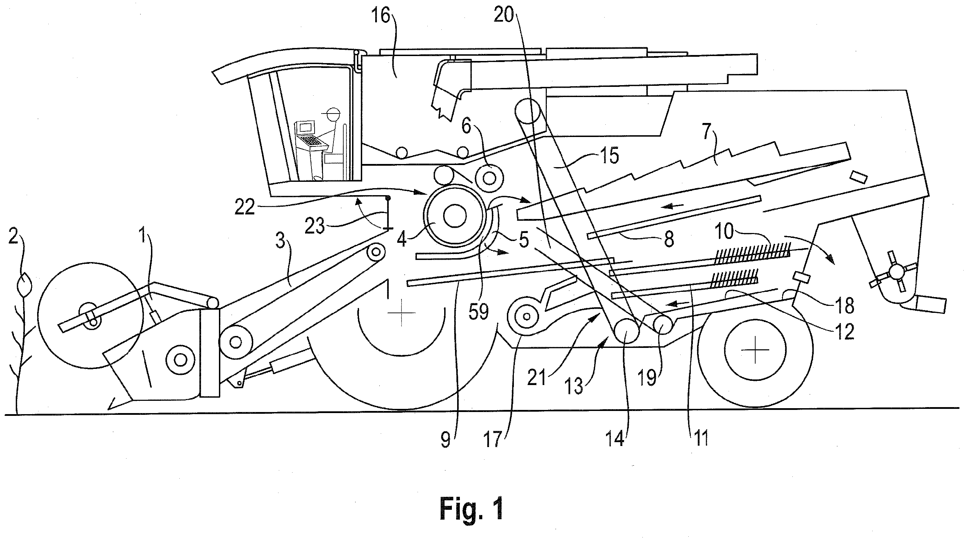

Der in Fig. 1 schematisch gezeigte Mähdrescher trägt an seiner Vorderseite ein austauschbares Schneidwerk wie etwa ein Getreideschneidwerk 1 zum Schneiden und Sammeln von Erntegut 2. Ein Schrägförderer 3 befördert das geschnittene Erntegut zu einem Dreschwerk 22, das eine mit quer zur Fahrtrichtung des Mähdreschers ausgerichteter Achse angeordnete Dreschtrommel 4 und einem Dreschkorb 5 umfasst.

Oberhalb des Schrägförderers 3 ist an der Karosserie des Mähdreschers eine Revisionsöffnung 23 vorgesehen. Eine Klappe der Revisionsöffnung 23 kann beiseite geschwenkt oder entfernt werden, um das dahinterliegende Dreschwerk 22 zugänglich zu machen.

Im Dreschwerk 22 aus dem Erntegut ausgedroschenes Korn passiert den Dreschkorb 5. Eine Wendetrommel 6 dient zur Weiterbeförderung des gedroschenen Ernteguts zu einer Abscheidereinrichtung 7, hier dargestellt als ein Strohschüttler, die restliches Korn sowie kleinteiliges Nichtkornmaterial aus dem Strom des gedroschenen Ernteguts isoliert. Anstelle des Strohschüttlers kann als Abscheidereinrichtung 7 auch ein Axialabscheider, z.B. mit einer oder zwei sich in Längsrichtung des Mähdreschers erstreckenden Trommeln, umgeben von Abscheidekörben, vorgesehen sein.

Erntegut, welches durch Roste der Abscheidereinrichtung 7 hindurch gefallen ist, gelangt auf einen sich unter der Abscheidereinrichtung 7 erstreckenden, nach vorn abschüssigen Rücklaufboden 8 und über diesen zu einem Vorbereitungsboden 9, auf dem es mit unmittelbar an der Dreschtrommel 4 abgeschiedenem und durch den Dreschkorb 5 hindurch getretenen Korn zusammengeführt wird. Der dadurch erhaltene Gutstrom, der reich an Korn ist, aber auch fein zerkleinerte Nichtkornbestandteile enthält, wird weiterbefördert auf ein Obersieb 10 einer Siebanordnung 21.

Das Obersieb 10 und ein darunter liegendes, zu dem Obersieb 10 in etwa paralleles Untersieb 11 sind unten und seitlich von einem Siebgehäuse umschlossen. Das Untersieb 11 ist ebenfalls Teil der Siebanordnung 21 Der in Fig. 1 gezeigte Boden 12 des Siebgehäuses ist von einem an einen hinteren Rand des Untersiebs 11 angrenzenden Rand aus nach vorn zu einer Schneckenmulde 13 hin abschüssig, in welcher eine Förderschnecke 14 rotiert. Die Förderschnecke 14 und ein daran angeschlossener Kornelevator 15 befördern von Nichtkornbestandteilen gereinigtes Korn, das sich auf dem Boden 12 sammelt, in einen Korntank 16 hinter der Führerkanzel des Mähdreschers.

Die Siebanordnung 21 und ein Gebläse 17 bilden eine Reinigungseinrichtung zum Entfernen der Nichtkornbestandteile aus dem Erntegutstrom. Das Gebläse 17 ist vor der Siebanordnung 21 platziert, um einen entgegen der Fahrtrichtung gerichteten Luftstrom zu liefern, der teils durch die Siebe 10, 11 hindurch, teils über sie hinweg streicht, um leichte Bestandteile des auf den Sieben 10, 11 befindlichen Ernteguts anzuheben und fort zu tragen. Bestandteile, die von dem Luftstrom über eine hintere Kante des Obersiebs 10 hinweg getragen werden, werden direkt aus dem Mähdrescher ausgeworfen, wie durch einen Pfeil in Fig. 1 angedeutet. Bei Bestandteilen, die durch das Obersieb 10 hindurch auf das Untersieb 11 gelangt sind und dort vom Luftstrom fort getragen werden, handelt es sich häufig um unvollständig ausgedroschene Ährenbruchstücke. Diese fallen über die hintere Kante des Untersiebs 11 hinweg auf einen Überkehrboden 18, sammeln sich an dessen unterem Rand an einer zweiten Schnecke 19, und gelangen über diese und einen Elevator 20 zurück zur Dreschtrommel 4.

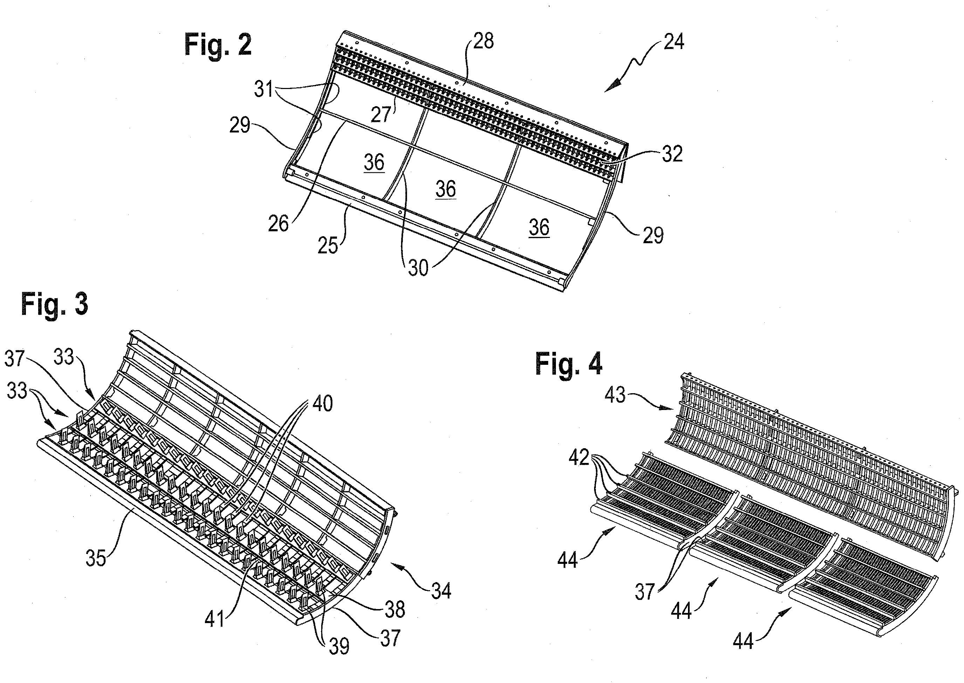

Fig. 2 zeigt einen Grundkörper 24 des Dreschkorks 5 in perspektivischer Ansicht. Der Grundkörper 24 ist ein Gestell mit mehreren sich in Richtung der Drehachse der Dreschtrommel 4 erstreckenden Längsleisten 25, 26, 27, 28, die durch gekrümmte, sich in Umfangsrichtung des Dreschwerks erstreckende Stirnleisten 29 und Stege 30 starr verbunden sind. Von den einander zugewandten Seiten der Stirnleisten 29 stehen jeweils Tragleisten 31 ab, deren konkave Flanken bündig mit konkaven inneren Kanten der Stege 30 verlaufen und als Auflage für zur Anbringung zwischen den Längsleisten 25 und 27 vorgesehene austauschbare Gutbearbeitungsleisten und Siebsegmente dienen, die nachfolgend mit Bezug auf Fig. 3 und 4 genauer beschrieben werden. Zwischen den weisen jeweils an ihren Zwischen den Längsleisten 27 und 28 erstreckt sich ein fest eingebautes Siebsegment 32.

Fig. 3 zeigt Gutbearbeitungsleisten 33 und ein austauschbares Siebsegment 34 eines zum Dreschen von Reis vorgesehenen ersten Satzes. Die Gutbearbeitungsleisten 33 sind in einem gekrümmten Rahmen 35 montiert, der bemessen ist, um diejenigen Öffnungen 36 des Grundkörpers 24 auszufüllen, die sich zwischen den beiden bezogen auf die Drehrichtung der Dreschtrommel 4 am weitesten stromaufwärts gelegenen Längsleisten 25, 26 erstrecken. Im montierten Zustand greift der Rahmen 35 zwischen die Stirnleisten 29 des Grundkörpers 24 ein, Stirnleisten 37 des Rahmens 35 ruhen auf den Tragleisten 31 und die Gutbearbeitungsleisten 33 auf den Stegen 30.

Die Gutbearbeitungsleisten 33 umfassen jeweils wenigstens eine Trägerleiste 38, die sich durchgehend über die gesamte Länge des Rahmens 35 erstreckt, und eine Vielzahl von Zähnen 39, die von der Trägerleiste 38 zur Achse des Dreschwerks 22 hin abstehen. Die Zähne 39 können z.B. mit Hilfe von Schrauben verankert sein, die von einer in Fig. 3 vom Betrachter abgewandten Seite her durch Löcher der Trägerleiste 38 in Gewinde der Zähne 39 eingreifen.

Im Beispiel der Fig. 3 umfassen die Gutbearbeitungsleisten 33 jeweils zwei Trägerleisten 38, und durch einen Spalt 41 zwischen den zwei Trägerleisten 38 erstrecken sich flache, gekrümmte Stege 40. Indem die Schrauben der Zähne 39 Löcher beider Trägerleisten durchsetzen, klemmen sie beim Festziehen auch die Trägerleisten 38 an den Stegen 40 fest, wodurch eine grobmaschige Siebstruktur entsteht.

Die Zähne 39 sind von einer Gutbearbeitungsleiste 33 zur anderen jeweils um 1 n-tel des Abstands zwischen den Zähnen 39 einer Leiste 33 axial versetzt angeordnet, wobei n die Zahl der Gutbearbeitungsleisten 33 bezeichnet. Im Beispiel der Fig. 3 ist n=3.

Das Siebsegment 34 schließt in Drehrichtung der Dreschtrommel 4 an den Rahmen 35 an. Der Rahmen 35 und das Siebsegment 34 sind untereinander nicht direkt verbunden; in der in Fig. 3 gezeigten einander eng benachbarten Stellung sind sie durch den Grundkörper 24 gehalten, wenn das Siebsegment 34 zwischen die Längsleisten 26, 27 und die Stirnleisten 29 eingefügt ist. Das Siebsegment 34 ist sehr grobmaschig, um nicht durch feuchtes, eventuell noch grünes oder fauliges Pflanzenmaterial verstopft zu werden, das bei der Reisernte leicht zusammen mit dem Erntegut aufgenommen werden kann und dann zusammen mit den Körnern von den Halmen abgestreift wird. Dieses feuchte Pflanzenmaterial tritt zusammen mit dem ausgedroschenen Kornanteil und Halmbruchstücken durch die Maschen des Siebsegments 34 hindurch und wird später vom Kornanteil getrennt. Aufgrund seines hohen Gewichts neigt das feuchte Pflanzenmaterial dazu, das Siebsegment 34 früh, bereits kurz hinter der Längsleiste 26, zu passieren. Da deshalb kaum noch solches Material die Längsleiste 27 erreicht, kann jenseits von dieser das Siebsegment 32 des Grundkörpers 24 engmaschiger sein als das Siebsegment 34.

Fig. 4 zeigt einen zweiten Satz von Gutbearbeitungsleisten 42 und Siebsegment 43 für die Ernte vom Weizen, Mais oder Hülsenfrüchten. Die Gutbearbeitungsleisten 42 sind frei von Zähnen. Sie sind auf mehrere, hier drei, in axialer Richtung gestaffelte Rahmen 44 verteilt. Die mehreren Rahmen 44 sind im montierten Zustand wie der Rahmen 35 zwischen die Längsleisten 25, 26 und Stirnleisten 29 des Grundkörpers 24 eingefügt, wobei jeder Rahmen 44 eine Öffnung 36 ausfüllt und einander berührende Stirnleisten 37 der Rahmen 44 auf den Stegen 30 aufliegen.

Das Siebsegment 43 ist in Fig. 4 von den Rahmen 44 beabstandet dargestellt, grenzt aber im montierten Zustand ebenfalls unmittelbar an die Rahmen 44 an. Das Siebsegment 43 ist engmaschiger als das Siebsegment 34 des ersten Satzes.

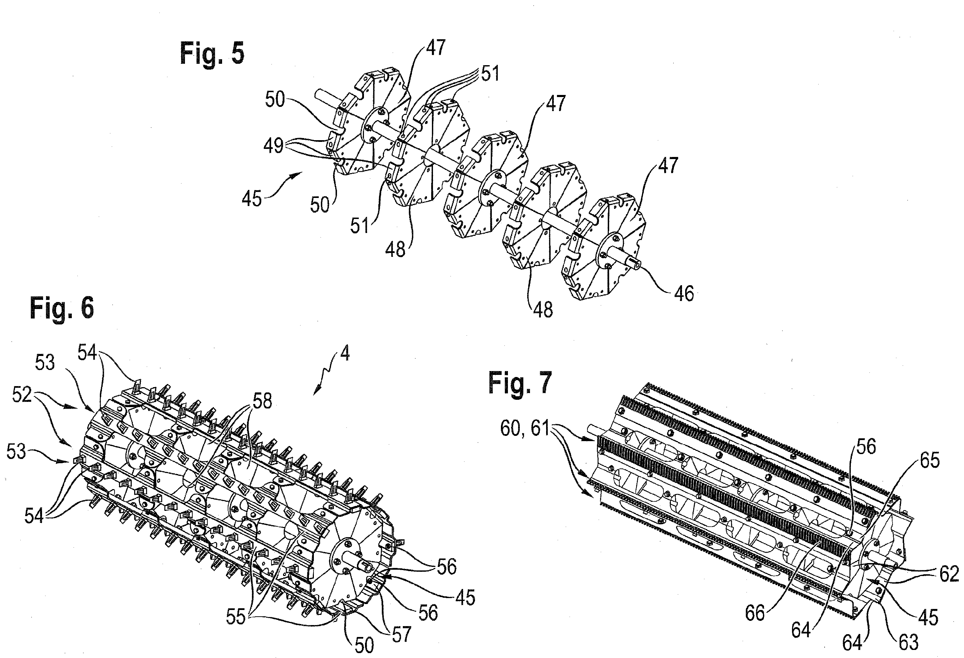

Fig. 5 zeigt einen Grundkörper 45 der Dreschtrommel 4. An einer Welle 46 sind mehrere Platten 47, 48 in Form eines gleichseitigen Vielecks, hier eines Sechsecks, aufgereiht. Einige dieser Platten 47 sind an der Welle 46 unmittelbar befestigt, andere Platten 48 haben eine zentrale Öffnung, durch die sich die Welle 46 berührungslos erstreckt; sie sind an der Welle 46 mittelbar über mit Bezug auf Fig. 6 und 7 beschriebene Gutbearbeitungsleisten befestigt.

An den Rändern der Platten 47, 48 sind Flansche 49 zur Befestigung der Gutbearbeitungsleisten abgewinkelt. Die Flansche 49 sind jeweils in der Mitte jeder Vieleckseite durch eine in die Platte 47, 48 hineinreichende Kerbe 50 unterbrochen. In der Nähe der Ecken der Platten 47, 48 sind die Flansche 49 mit Schraublöchern 51 versehen.

Fig. 6 zeigt den Grundkörper 45, bestückt mit Gutbearbeitungsleisten 52 des ersten Satzes. Die Gutbearbeitungsleisten 52 umfassen jeweils eine Trägerleiste 53, die sich durchgehend über die gesamte Länge der Dreschtrommel 4 erstreckt, und eine Vielzahl von Zähnen 54, die von der Dreschtrommel 4 radial abstehen. Die Zähne 54 können mit den Zähnen 39 der Fig. 3 identisch sein. Wie die Zähne 39 sind sie von einer Gutbearbeitungsleiste 52 zur anderen um ein n-tel des Zahnabstandes gegeneinander axial versetzt und so platziert, dass die Zähne 54 bei der Drehung der Dreschtrommel die Zähne 39 jeweils in zu beiden Seiten gleichem Abstand passieren. Indem die Zähne 39 und 54 radial überlappen, kann ein Zahn 54 jeweils einen Halm mit sich mitziehen, so dass an dem Halm hängende Körner von den Zähnen 39, die er passiert, abgestreift werden.

Auch die Trägerleiste 53 kann zweiteilig aufgebaut sein, hier umfasst sie zum einen ein Blechprofil 55, das jeweils in Höhe der Platten 47, 48 zu einem hutförmigen Querschnitt verbreitert ist, wobei die äußeren Abschnitte des hutförmigen Querschnitts durch in die Schraublöcher 51 eingreifende Schrauben 56 an den Platten 47,48 verankert sind. Der zweite Teil der Trägerleiste 53 ist eine hochsteife Stange 57, die sich im Innern des hutförmigen Querschnitts erstreckt und eine feste Verankerung für die daran verschraubten Zähne 54 bildet. Die Kerben 50 der Platten 47, 48 sind vorgesehen, um Köpfen der dafür verwendeten Schrauben 56 Platz zu bieten.

Zwischen den Platten 47, 48 ist die Breite des Blechprofils 55 im Wesentlichen auf die der Stange 57 reduziert, um großflächige Fenster 58 zu bilden. Durch diese Fenster kann vom Schrägförderer 3 zugeführtes Erntegut, bevor es in den zwischen der Dreschtrommel 4 und dem Dreschkorb 5 verlaufenden Dreschspalt 59 hineingezogen wird, zeitweilig ins Innere der Dreschtrommel 4 eindringen; dies trägt zu einer effizienten Gutübergabe an das Dreschwerk 22 bei.

Fig. 7 zeigt den zeigt den Grundkörper 45, bestückt mit Gutbearbeitungsleisten 60 des zweiten Satzes. Die Gutbearbeitungsleisten 60 umfassen jeweils ein Blechprofil 61, das eine Ecke der Platten 47, 48 überbrückend montiert ist. Von den zwei Schraublöchern 51 eines jeden Flanschs 49 ist hier nur eines genutzt, um zwei Blechprofile 61 geschuppt überlappend festzuschrauben. Eines dieser beiden Blechprofile 61 hat einen flachen Schenkel 62, der sich über die zum Schraubloch 51 benachbarte Ecke der Platten 47, 48 hinweg über den nächstbenachbarten Flansch 51 erstreckt und in eine zu diesem Flansch in etwa parallele Scheitelfläche 63 übergeht. An die Scheitelfläche 63 schließt wiederum ein zweiter Schenkel 64 an, der sich zurück zu den Platten 47, 48 erstreckt und von dem Schraublaschen 65 abgewinkelt sind, die überlappend mit dem Schenkel 62 des benachbarten Blechprofils 61 an den Platten 47, 48 verschraubt sind. An den Scheitelflächen 63 sind einteilig über die gesamte Länge der Dreschtrommel 4 durchgehende Schlagleisten 66 verschraubt, die den Gutbearbeitungsleisten 60 die erforderliche Steifigkeit geben. Die im Betrieb dem Dreschkorb 5 zugewandten Außenseiten der Schlagleisten 66 sind mit einer in alternierende Richtungen schräg zur Umfangsrichtung verlaufenden Riffelung versehen, um während des Dreschens das Erntegut seitwärts hin und her zu bewegen.

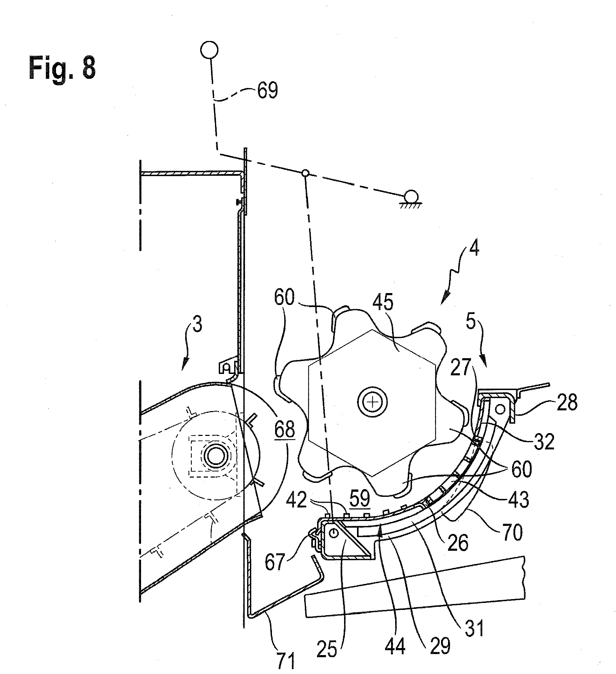

Fig. 8 zeigt einen schematischen axialen Schnitt durch das Dreschwerk 22, wobei die Dreschtrommel 4 und der Dreschkorb 5 exemplarisch mit Gutbearbeitungsleisten 42, 60 des zweiten Satzes gezeigt sind. Über der Einmündung des Schrägförderers 3 in das Gehäuse des Mähdreschers ist die Revisionsöffnung 23 zu sehen. Ein die Revisionsöffnung 23 verschießender Deckel kann entfernt werden; wird überdies der Schrägförderer 3 abgekoppelt, dann wird dadurch die Öffnung, über die das Dreschwerk 22 zugänglich ist, noch erheblich vergrößert und ist über seine gesamte Breite hinweg ungehindert zugänglich.

Schrauben 67, durch die die Rahmen 44 an der Längsleiste 25 verankert sind, sind über die Revisionsöffnung 23 und einen Zwischenraum 68 zwischen Schrägförderer 3 und Dreschtrommel 4 zugänglich und können gelöst werden. Der Dreschkorb 5 ist um eine entlang der Längsleiste 28 verlaufende Achse schwenkbar und kann mit Hilfe eines Betätigungshebels 69 abwärts in eine Wartungsstellung geschwenkt werden, in welcher die Rahmen 44 angehoben und über den Zwischenraum 68 und die Revisionsöffnung 23 entnommen werden können.

Die Länge der Revisionsöffnung 23 entspricht der Länge des Dreschkorbs 5; die Dreiteilung der Rahmen 44 ist daher nicht zwingend notwendig, um die Rahmen 44 über die Revisionsöffnung entnehmen zu können, vereinfacht dies aber, da die einzelnen, relativ kleinen Rahmen 44 handlicher und leichter sind als ein über die ganze Länge des Dreschkorbs 5 durchgehender Rahmen. Dies ist insbesondere deshalb zweckmäßig, weil es für eine Umrüstung des Mähdreschers zwischen Weizen, Mais und Hülsenfrüchten ausreicht, die Breite des Dreschspalts 59 zu variieren und dies durch Verwendung von Rahmen 44 mit unterschiedlich hohen Gutbearbeitungsleisten 42 mit geringem Arbeitsaufwand machbar ist.

Zwischen einem stromabwärtigen Ende des Schrägförderers 3 und der Dreschtrommel 4 ist in an sich bekannter Weise eine Steinfangmulde 71 vorgesehen, die sich über die gesamte Breite des Schrägförderers 3 bzw. die Länge der Dreschtrommel 4 erstreckt, um im vom Schrägförderer 3 geförderten Erntegut mitgeführte Steine vor Erreichen der Dreschtrommel abzufangen. Wenn diese Steinfangmulde 71 abmontiert wird, wird ebenfalls eine Öffnung geschaffen, über die ein Austausch der dreschkorbseitigen Gutbearbeitungsleisten 42 möglich ist. Wenn der Schrägförderer 3 wie üblich an der Karosserie höhenverstellbar ist, kann durch Aufwärtsverstellen des Schrägförderers 3 die durch Entfernen der Steinfangmulde 71 geschaffene Öffnung vergrößert und der Zugriff auf die Gutbearbeitungsleisten 42 erleichtert werden.

Um den Mähdrescher für die Ernte von Reis umzurüsten, müssen nicht nur die Rahmen 44 durch den Rahmen 35 sondern auch die Gutbearbeitungsleisten 60 durch Gutbearbeitungsleisten 52 und das Siebsegment 43 durch das Siebsegment 34 ersetzt werden. Damit die Schrauben 56 gelöst werden können, die die Gutbearbeitungsleisten 60 an den mittleren Platten 47, 48 der Dreschtrommel 5 verankern, wird der Schrägförderer 3 abgekoppelt. Über die dadurch vergrößerte Revisionsöffnung kann auch der relativ sperrige Rahmen 35 bequem eingeführt werden.

Das Siebsegment 43 ist auch nach dem Absenken des Dreschkorbs 5 von der Revisionsöffnung 23 aus nur schwer erreichbar. Um seinen Austausch zu erleichtern, ist in einer Seitenwand der Mähdrescherkarosserie eine zweite Revisionsöffnung 70 gebildet, mit der das Siebsegment 43 abgesenkten Stellung des Dreschkorbs 5 fluchtet. Über diese Öffnung kann das Siebsegment 43 in axialer Richtung herausgezogen und durch das Siebsegment 34 ersetzt werden.

### Bezugszeichenliste

- 1: Getreideschneidwerk
- 2: Erntegut
- 3: Schrägförderer
- 4: Dreschtrommel
- 5: Dreschkorb
- 6: Wendetrommel
- 7: Abscheidereinrichtung
- 8: Rücklaufboden
- 9: Vorbereitungsboden
- 10: Obersieb
- 11: Untersieb
- 12: Boden
- 13: Schneckenmulde
- 14: Förderschnecke
- 15: Kornelevator
- 16: Korntank
- 17: Gebläse
- 18: Überkehrboden
- 19: Schnecke
- 20: Elevator
- 21: Siebanordnung
- 22: Dreschwerk
- 23: Revisionsöffnung
- 24: Grundkörper
- 25: Längsleiste
- 26: Längsleiste
- 27: Längsleiste
- 28: Längsleiste
- 29: Stirnleiste
- 30: Steg
- 31: Tragleiste
- 32: Siebsegment
- 33: Gutbearbeitungsleiste
- 34: Siebsegment
- 35: Rahmen
- 36: Öffnung
- 37: Stirnleiste
- 38: Trägerleiste
- 39: Zahn
- 40: Steg
- 41: Spalt
- 42: Gutbearbeitungsleiste
- 43: Siebsegment
- 44: Rahmen
- 45: Grundkörper
- 46: Welle
- 47: Platte
- 48: Platte
- 49: Flansch
- 50: Kerbe
- 51: Schraubloch
- 52: Gutbearbeitungsleiste
- 53: Trägerleiste
- 54: Zahn
- 55: Blechprofil
- 56: Schraube
- 57: Stange
- 58: Fenster
- 59: Dreschspalt
- 60: Gutbearbeitungsleiste
- 61: Blechprofil
- 62: Schenkel
- 63: Scheitelfläche
- 64: Schenkel
- 65: Schraublasche
- 66: Schlagleiste
- 67: Schraube
- 68: Zwischenraum
- 69: Betätigungshebel
- 70: Revisionsöffnung
- 71: Steinfangmulde

## Patentansprüche

1. Mähdrescher mit einem Dreschwerk (22), das wenigstens eine Dreschtrommel (4) und einen die Dreschtrommel (4) auf wenigstens einem Teil ihres Umfangs umgebenden Dreschkorb (5) umfasst, umfasst, **dadurch gekennzeichnet, dass** die Dreschtrommel (4) und der Dreschkorb (5) jeweils einen Grundkörper (45, 24) und einen ersten Satz Gutbearbeitungsleisten (52, 33) umfassen, die austauschbar an dem jeweiligen Grundkörper (45, 24) adaptiert sind, wobei
wenigstens ein zweiter Satz von Gutbearbeitungsleisten (42, 60) anstelle des ersten Satzes (33, 52) an dem jeweiligen Grundkörper (45, 24) montierbar ist, wobei der erste und der zweite Satz an unterschiedliche Arten von Erntegut angepasst sind, wobei
die dreschtrommelseitigen Gutbearbeitungsleisten (33) und die dreschkorbseitigen Gutbearbeitungsleisten (52) des ersten Satzes Zähne (39, 54) aufweisen, die im montierten Zustand in einem Dreschspalt (59) radial überlappen.

2. Mähdrescher nach Anspruch 1, **dadurch gekennzeichnet, dass** die dreschtrommelseitigen Gutbearbeitungsleisten (60) und die dreschkorbseitigen Gutbearbeitungsleisten (42) des zweiten Satzes im montierten Zustand radial nicht überlappen.

3. Mähdrescher nach einem der Ansprüche 1 bis 2, **dadurch gekennzeichnet, dass** die dreschtrommelseitigen Gutbearbeitungsleisten (52, 60) wenigstens eines Satzes sich zusammenhängend über die gesamte axiale Ausdehnung des Dreschwerks (22) erstrecken.

4. Mähdrescher nach einem der vorhergehenden Ansprüche, **dadurch gekennzeichnet, dass** der Grundkörper (45) der Dreschtrommel (4) eine Mehrzahl von auf einer Trägerwelle (46) beabstandet voneinander aufgereihten Platten (47, 48) umfasst, an deren Rändern die dreschtrommelseitigen Gutbearbeitungsleisten (52, 60) verankert sind.

5. Mähdrescher nach Anspruch 1, **dadurch gekennzeichnet, dass** die Gutbearbeitungsleisten (33, 52) des ersten Satzes jeweils eine Trägerleiste (38, 53) umfassen, an der die Zähne (39, 54) montiert sind, und dass die Trägerleiste (38, 53) sich ununterbrochen über die gesamte axiale Ausdehnung des Dreschwerks (22) erstreckt.

6. Mähdrescher nach einem der vorhergehenden Ansprüche, **dadurch gekennzeichnet, dass** das Dreschwerk (22) über eine Revisionsöffnung (23) zugänglich ist, deren Abmessung wenigstens der Länge der Gutbearbeitungsleisten (52, 33) entspricht.

7. Mähdrescher nach Anspruch 5 oder 6, **dadurch gekennzeichnet, dass** ein dem Dreschwerk (22) vorgelagerter Schrägförderer (3) abnehmbar ist und die die dreschtrommelseitigen Gutbearbeitungsleisten (52, 60) über eine durch Abnehmen des Schrägförderers (3) frei werdende Öffnung aus dem Dreschwerk (22) entnehmbar und in das Dreschwerk einführbar sind.

8. Mähdrescher nach einem der vorhergehenden Ansprüche, **dadurch gekennzeichnet, dass** die dreschkorbseitigen Gutbearbeitungsleisten (33, 42) in einem bezogen auf die Förderrichtung des Ernteguts durch das Dreschwerk (22) stromaufwärtigen Bereich des Grundkörpers (24) des Dreschkorbs (5) montiert sind und dass an einem stromabwärtigen Bereich des Grundkörpers (24) ein austauschbares erstes Siebsegment (34, 43) vorgesehen ist.

9. Mähdrescher nach Anspruch 8, **dadurch gekennzeichnet, dass** das erste Siebsegment (34, 43) in axialer Richtung aus dem Dreschwerk (22) entnehmbar ist.

10. Mähdrescher nach Anspruch 8 oder 9, **dadurch gekennzeichnet, dass** der Grundkörper (24) des Dreschkorbs (5) ein zweites Siebsegment (32) aufweist, das in Förderrichtung des Ernteguts an das erste Siebsegment (34, 43) anschließt.

## Claims

1. A combine harvester with a threshing assembly (22) which comprises at least one threshing drum (4) and comprises a threshing concave (5) which surrounds at least a portion of the circumference of the threshing drum (4), **characterized in that** the threshing drum (4) and the threshing concave (5) respectively comprise a main body (45, 24) and a first set of material processing bars (52, 33) which are adapted to be capable of being interchanged on the respective main body (45, 24), wherein
at least one second set of material processing bars (42, 60) can be mounted on the respective main body (45, 24) in place of the first set (33, 52), wherein the first and the second set are adapted for different types of harvested material, wherein the material processing bars (33) on the threshing drum side and the material processing bars (52) on the threshing concave side of the first set have teeth (39, 54) which overlap radially in a threshing gap (59) when in the mounted state.

2. The combine harvester according to claim 1, **characterized in that** the material processing bars (60) on the threshing drum side and the material processing bars (42) on the threshing concave side of the second set do not overlap radially in the mounted state.

3. The combine harvester according to claim 1 or claim 2, **characterized in that** the material processing bars (52, 60) on the threshing drum side of at least one set extend continuously over the entire axial extent of the threshing assembly (22).

4. The combine harvester according to one of the preceding claims, **characterized in that** the main body (45) of the threshing drum (4) comprises a plurality of plates (47, 48) spaced apart from each other in a row on a support shaft (46), the material processing bars (52, 60) on the threshing drum side being anchored on the edges of the plates.

5. The combine harvester according to claim 1, **characterized in that** the material processing bars (33, 52) of the first set respectively comprise a support bar (38, 53) on which the teeth (39, 54) are mounted, and **in that** the support bar (38, 53) extends without interruption over the entire axial extent of the threshing assembly (22).

6. The combine harvester according to one of the preceding claims, **characterized in that** the threshing assembly (22) is accessible via an inspection opening (23) the dimensions of which correspond to at least the length of the material processing bars (52, 33).

7. The combine harvester according to claim 5 or claim 6, **characterized in that** an inclined conveyor (3) mounted in front of the threshing assembly (22) is removable and the material processing bars (52, 60) on the threshing drum side can be removed from the threshing assembly (22) and introduced into the threshing assembly via an opening which is opened up by removal of the inclined conveyor (3).

8. The combine harvester according to one of the preceding claims, **characterized in that** the material processing bars (33, 42) on the threshing concave side are mounted in a region of the main body (24) of the threshing concave (5) which is upstream with respect to the direction of conveying of the harvested material through the threshing assembly (22), and **in that** an interchangeable first concave segment (34, 43) is provided at a downstream region of the main body (24).

9. The combine harvester according to claim 8, **characterized in that** the first concave segment (34, 43) can be removed from the threshing assembly (22) in the axial direction.

10. The combine harvester according to claim 8 or claim 9, **characterized in that** the main body (24) of the threshing concave (5) has a second concave segment (32) which is contiguous with the first concave segment (34, 43) in the direction of conveying the harvested material.

## Revendications

1. Moissonneuse-batteuse comprenant un système de battage (22), qui inclut au moins un batteur (4) et un contre-batteur (5) entourant le batteur (4) sur au moins une partie de sa périphérie, **caractérisée en ce que** le batteur (4) et le contre-batteur (5) incluent respectivement un corps de base (45, 24) et un premier jeu de battes de traitement de produit (52, 33) qui sont adaptées de manière échangeable sur le corps de base respectif (45, 24), au moins un second jeu de battes de traitement de produit (42, 60) étant montable sur le corps de base respectif (45, 24) au lieu du premier jeu (33, 52), le premier et le second jeu étant adaptés à différents types de produit récolté, les battes de traitement de produit côté batteur (33) et les battes de traitement de produit côté contre-batteur (52) du premier jeu comportant des dents (39, 54) qui, à l'état monté, se chevauchent radialement dans un interstice de battage (59).

2. Moissonneuse-batteuse selon la revendication 1, **caractérisée en ce que** les battes de traitement de produit côté batteur (60) et les battes de traitement de produit côté contre-batteur (42) du second jeu ne se chevauchent pas radialement à l'état monté.

3. Moissonneuse-batteuse selon une des revendications 1 à 2, **caractérisée en ce que** les battes de traitement de produit côté batteur (52, 60) au moins d'un jeu s'étendent de manière conjointe sur toute l'extension axiale du système de battage (22).

4. Moissonneuse-batteuse selon une des revendications précédentes, **caractérisée en ce que** le corps de base (45) du batteur (4) inclut une pluralité de plaques (47, 48) qui sont alignées à distance les unes des autres sur un arbre porteur (46) et sur les bords desquelles sont fixées les battes de traitement de produit côté batteur (52, 60).

5. Moissonneuse-batteuse selon la revendication 1, **caractérisée en ce que** les battes de traitement de produit (33, 52) du premier jeu incluent respectivement une batte porteuse (38, 53) sur laquelle les dents (39, 54) sont montées, et **en ce que** la batte porteuse (38, 53) s'étend de façon ininterrompue sur toute l'extension axiale du système de battage (22).

6. Moissonneuse-batteuse selon une des revendications précédentes, **caractérisée en ce que** le système de battage (22) est accessible à travers une ouverture de révision (23) dont la dimension correspond au moins à la longueur des battes de traitement de produit (52, 33).

7. Moissonneuse-batteuse selon la revendication 5 ou 6, **caractérisée en ce qu'**un convoyeur incliné (3) disposé en amont du système de battage (22) peut être déposé et les les battes de traitement de produit côté batteur (52, 60) peuvent être retirées du système de battage (22) et introduites dans le système de battage à travers une ouverture libérée par la dépose du convoyeur incliné (3).

8. Moissonneuse-batteuse selon une des revendications précédentes, **caractérisée en ce que** les battes de traitement de produit côté contre-batteur (33, 42) sont montées dans une zone du corps de base (24) du contre-batteur (5) située en amont par rapport à la direction de convoyage du produit récolté à travers le système de battage (22), et **en ce que** dans une zone aval du corps de base (24) est prévu un premier segment de grille échangeable (34, 43).

9. Moissonneuse-batteuse selon la revendication 8, **caractérisée en ce que** le premier segment de grille (34, 43) peut être retiré du système de battage (22) dans la direction axiale.

10. Moissonneuse-batteuse selon la revendication 8 ou 9, **caractérisée en ce que** le corps de base (24) du contre-batteur (5) comporte un second segment de grille (32) qui est contigu au premier segment de grille (34, 43) dans la direction de convoyage du produit récolté.
